# EUROPÄISCHE PATENTSCHRIFT

(11) **EP 1 452 380 B1**
(45) Veröffentlichungstag und Bekanntmachung des Hinweises auf die Patenterteilung: **15.04.2009**
(21) Anmeldenummer: 03027964.0
(22) Anmeldetag: 05.12.2003
(51) Int. Cl.: B60K 17/08, F01M 11/00

(54) **Antriebsaggregat für ein Kraftfahrzeug**
Drive unit for a motor vehicle
Ensemble de propulsion pour véhicule à moteur

(30) Priorität: 28.02.2003 DE 10308757
(43) Veröffentlichungstag der Anmeldung: 01.09.2004
(73) Patentinhaber: Dr. Ing. h.c. F. Porsche Aktiengesellschaft, 70435 Stuttgart (DE)
(72) Erfinder: Hülsemann, Ulrich, 75242 Neuhausen (DE)

(56) Entgegenhaltungen:
- EP-A- 0 183 051
- DE-A- 2 140 377
- DE-A- 10 029 844
- GB-A- 378 489
- GB-A- 1 006 701
- GB-A- 2 291 117

## Beschreibung

Die Erfindung betrifft ein Antriebsaggregat für ein Kraftfahrzeug, insbesondere einen Personenkraftwagen der Sportwagengattung nach dem Oberbegriff des Patentanspruchs 1.

Ein bekanntes Antriebsaggregat EP 0 183 051 A1, ist in einer Ausführungsform - z. B. Fig.13 - im Heck des Personenkraftwagens angeordnet, und es wird gebildet durch eine Brennkraftmaschine und ein Getriebe, die miteinander verblockt sind, wobei für ein Differential und das Getriebe unterschiedliche Gehäuse vorgesehen sind.

In der GB 378 489 A ist ein Antriebsaggregat nach dem Oberbegriff des Anspruchs 1 beschrieben, das eine Gehäusebaueinheit zur Aufnahme einer Kupplung, eines Getriebes und eines Differentials umfasst. Dabei ist die Gehäusebaueinheit als ein Teil der Brennkraftmaschine ausgebildet und stellt weiterhin das Kurbelgehäuse dar.

Aus der US 4,920,825 geht eine Brennkraftmaschine für ein Kraftfahrzeug hervor, die eine Gehäusestruktur umfasst, in die ein Zylindergehäuse, ein Kurbelgehäuse und ein Getriebegehäuse integriert sind. An der Gehäusestruktur ist eine Anlassvorrichtung befestigt, die mit einem Anlassritzel auf eine Zwischenwelle einwirkt. Die Zwischenwelle arbeitet mit der Kurbelwelle der Brennkraftmaschine zusammen.

Aufgabe der Erfindung ist es ein Antriebsaggregat insbesondere für einen Personenkraftwagen der Sportwagengattung zu schaffen, bei dem eine Brennkraftmaschine, eine Kupplung, ein Getriebe und ein Differential räumlich günstig zueinander angeordnet sind. Dabei sollten Kupplung, Getriebe und Differential in einer vorteilhaft gestalteten Gehäusebaueinheit zusammengefasst sein.

Nach der Erfindung wird diese Aufgabe durch die Merkmale des Patentanspruchs gelöst werden. Weitere, die Erfindung ausgestaltende Merkmale sind in den Unteransprüchen enthalten

Die mit der Erfindung hauptsächlich erzielten Vorteile sind darin zu sehen, dass die Gehäusebaueinheit die Kupplung und dank der Vorsehung der ersten, zweiten und dritten Lager die Eingangswelle sowie die Ausgangswelle des Getriebes und das Differential auf teleologische Art und Weise aufnimmt. Dabei wird der Anwendungsbereich der Gehäusebaueinheit noch durch die Integration des Behälterbereichs für die Trockensumpfschmierung der Brennkraftmaschine erweitert. Ein einfache Herstellung der Gehäusebaueinheit ergibt sich dann, wenn sie unabhängig von einer Gehäusestruktur der Brennkraftmaschine hergestellt ist, wobei die Gehäusestruktur und die Gehäusebaueinheit an einer gemeinsamen Trennebene zu einer kompakten Einheit zusammengesetzt sind. Hierbei wirkt sich räumlich günstig aus, vor allem in Fahrzeuglängsrichtung gesehen, dass die Eingangswelle und die Ausgangswelle des Getriebes quer zu einer Längsrichtung der Kurbelwelle verlaufen. Darüber hinaus ist die Gehäusebaueinheit zur Aufnahme der Kupplung und einer Anlassvorrichtung für die Brennkraftmaschine ausgebildet, so dass sie durch gezielte Konstruktionsmaßnahmen weitere Funktionen übernimmt.

In der Zeichnung wird ein Ausführungsbeispiel der Erfindung gezeigt, das nachstehend näher erläutert wird.

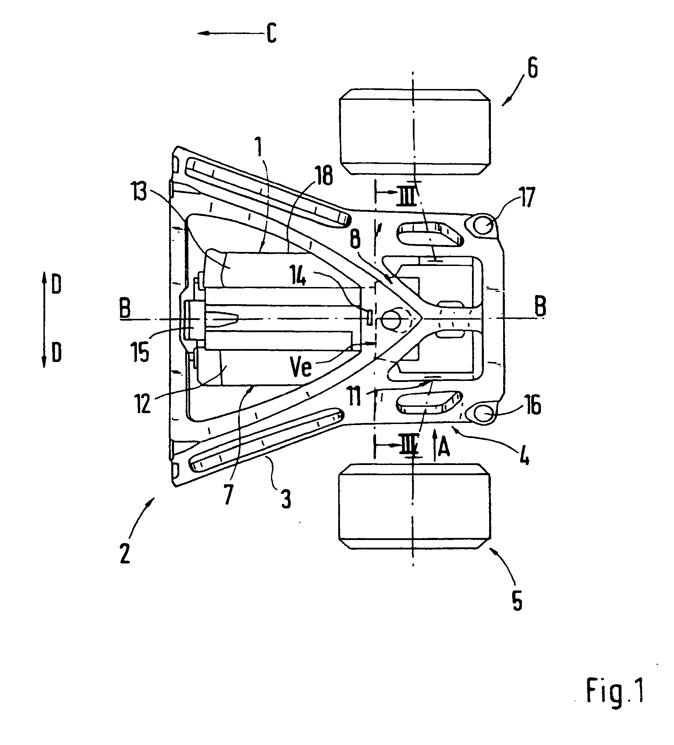

Es zeigen
- Fig. 1: eine Ansicht von oben auf ein erfindungsgemäße Antriebsaggregat, eingebaut in einen teilweise dargestellten Personenkraftwagen,

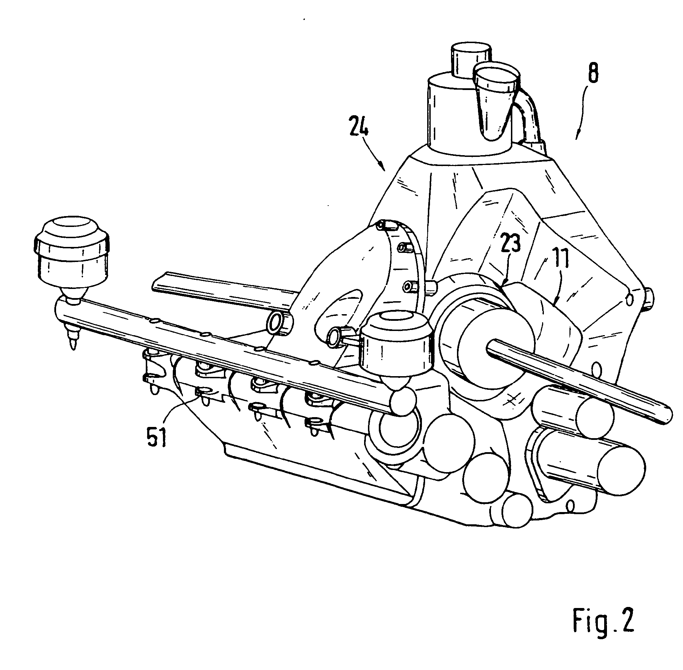

- Fig. 2: eine Schrägansicht auf das Antriebsaggregat von hinten rechts des Personenkraftwagens,
- Fig. 3: einen Schnitt nach der Linie IV-IV der Fig. 1 in größerem Maßstab,
- Fig. 4: eine Ansicht in Pfeilrichtung A der Fig. 1 in größerem Maßstab,
- Fig. 5: eine Schrägansicht von hinten links auf eine Gehäusebaueinheit des Antriebsaggregats,
- Fig. 6: eine Schrägansicht teilweise im Schnitt von vorne links auf die Gehäusebaueinheit,
- Fig. 7: einen Schnitt etwa nach der Linie Vll-Vll der Fig.1,
- Fig. 8: eine Ansicht entsprechend Fig. 7,
- Fig. 9: eine Schrägansicht auf die Rückseite der Brennkraftmaschine von hinten links.

Ein Antriebsaggregat 1 ist in einen Personenkraftwagen 2 der Sportwagengattung - dynamisch, anmutendes Aussehen und anspruchsvolle Leistung - eingebaut, von dem lediglich ein Aggregatträger 3 des Antriebsaggregats 1 und eine Hinterachse 4 mit Rädern 5 sowie 6 gezeigt werden. Das Antriebsaggregat 3 umfasst eine Brennkraftmaschine 7 und eine Gehäusebaueinheit 8, die zur Aufnahme einer Kupplung 9 eines Getriebes 10 und eines Differentials 11 ausgebildet ist. Die gegenüberliegende Zylinderreihen 12,13 aufweisende Brennkraftmaschine 7 mit einer etwa in einer Längsmittelebene B-B des Personenkraftwagens 2 verlaufenden Kurbelwelle 14 - nur schematisch dargestellt - liegt in Fahrtrichtung C gesehen vor der Hinterachse 4 - Mittelmotoranordnung -, und sie ist mit der Gehäusebaueinheit 8 unmittelbar verblockt. Darüber hinaus ist das Antriebsaggregat 3 unter Vermittlung eines vorderen Aggregatlagers 15 und von hinteren Aggregatlagern 16, 17 am Aggregatträger 3, der nach Art eines besagtes Antriebsaggregat allseitig umgebenden Hüllkörpers gestaltet ist, befestigt.

Die als ein von einer Gehäusestruktur 18 der Brennkraftmaschine 7 getrennt hergestellte Gehäusebaueinheit 8 - beide sind an einer Verbindungsebene Ve zusammengesetzt, die in Fahrzeugquerrichtung D-D ausgerichtet ist - nimmt zum einen die mit der Kurbelwelle 14 der Brennkraftmaschine 7 verbundene Kupplung 9 auf und besitzt zum anderen erste Lager 19 und zweite Lager 20 für eine Eingangswelle 21 bzw. eine Ausgangswelle 22 des Getriebes 10, die zur Längsmittelebene B-B des Personenkraftwagens 1 ausgerichtet sind. Überdies ist die Gehäusebaueinheit 8 mit dritten Lagern 23 für das Differential 11 versehen. Und in die Gehäusebaueinheit 8 ist ein Behälterbereich 24 für eine Trockensumpfschmierung integriert.

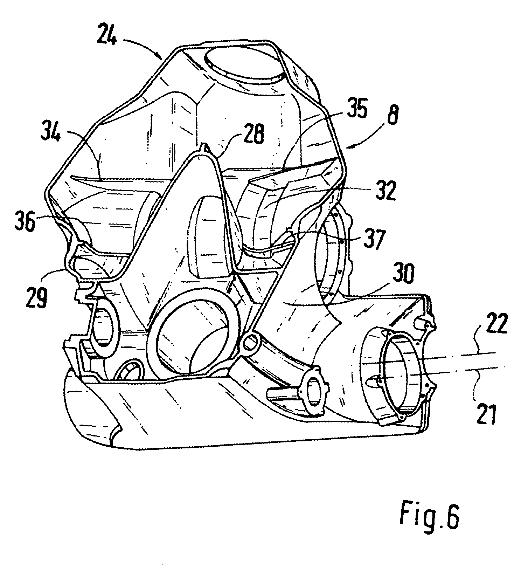

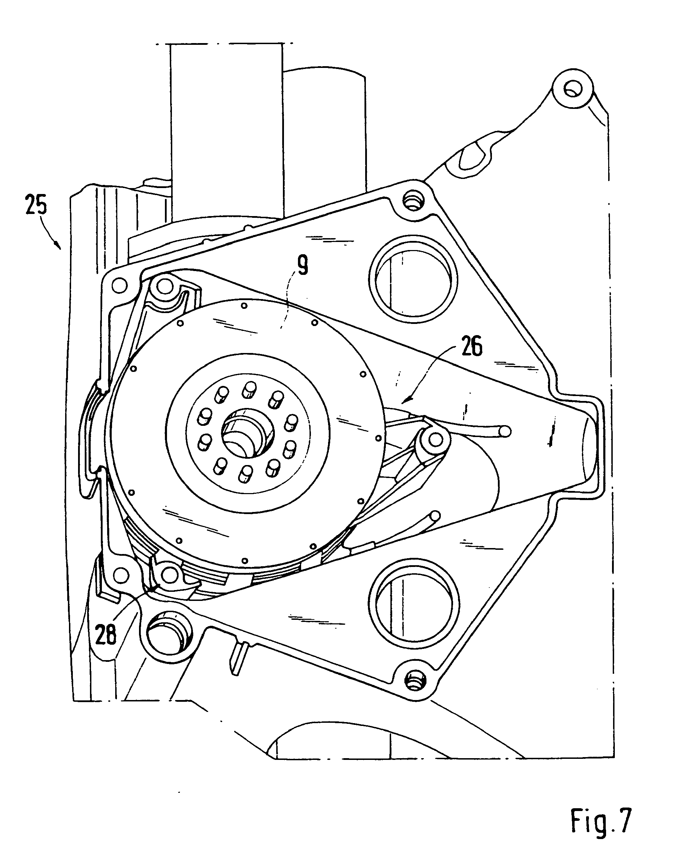

Auf einer der Brennkraftmaschine 7 zugekehrten Seite 25 ist die bspw. aus einer Leichtmetalllegierung bestehende Gehäusebaueinheit 8 mit einem Aufnahmeraum 26 versehen, der die Kupplung 9 zusammen mit einer Konsole 27 für eine Ausrückvorrichtung 28 im wesentlichen vollständig aufnimmt - Fig. 7 -. Der Aufnahmeraum 26 weist eine Trapezform auf, die sich zum oberhalb der Kupplung 9 liegenden Behälterbereich 24 hin verjüngt. Dazu ist in dem Behälterbereich 24 eine dachartige Gehäusewand 28 eingearbeitet - Fig. 6 -, die gegenüberliegende Seitenwände 29, 30 verbinden und die zwei relativ großvolumige Behälterräume 31,32 für den Behälterbereich 24 der Trockensumpfschmierung bildet. Zwischen einer Rückwand 33 und den Seitenwänden 29, 30 sind in der Höhe versetzte sich etwa horizontal erstreckende Verstärkungsrippen 34, 35 und 36, 37 vorgesehen.

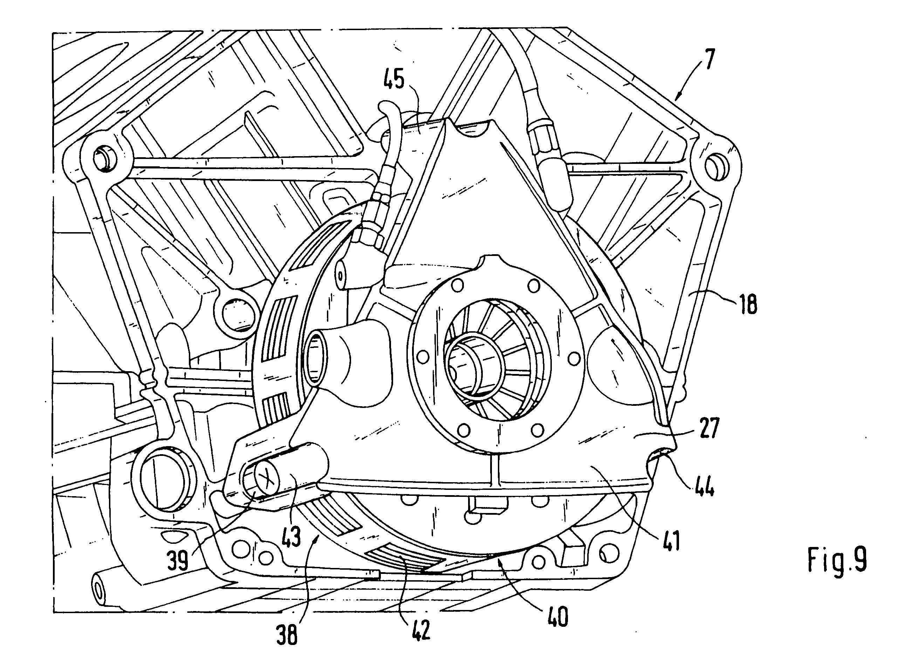

Die Kupplung 9 ist mittels einer Schwungscheibe 38 mit der Kurbelwelle 14 der Brennkraftmaschine 7 verbunden, was nicht dargestellt ist. Dagegen ist die Konsole 27 unter Vermittlung von Schrauben 39 an der Gehäusestruktur 18 der Brennkraftmaschine 7 befestigt, und zwar auf einer der Gehäusebaueinheit 8 zugekehrten Seite 40. Hierzu umfasst die Konsole 27 eine Grundplatte 41, die die Form eines gleichseitigen Dreiecks aufweist. An den Spitzen des Dreiecks sind drei mehrere rotationssymmetrische Kupplungselemente 42 der Kupplung 9 umgreifende Befestigungszapfen 43,44 und 45 angebracht, die sich an der Gehäusestruktur 18 der Brennkraftmaschine 7 abstützen - Fig. 9 -.

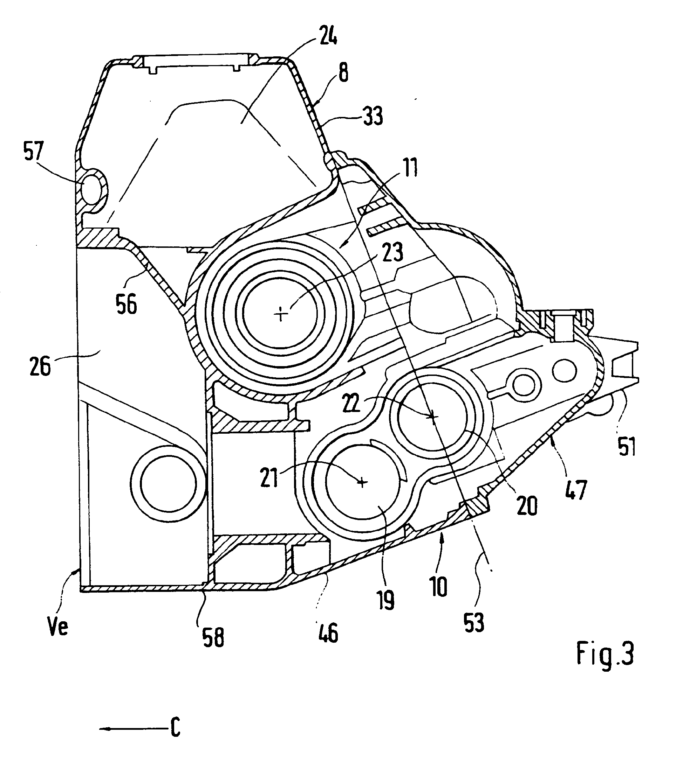

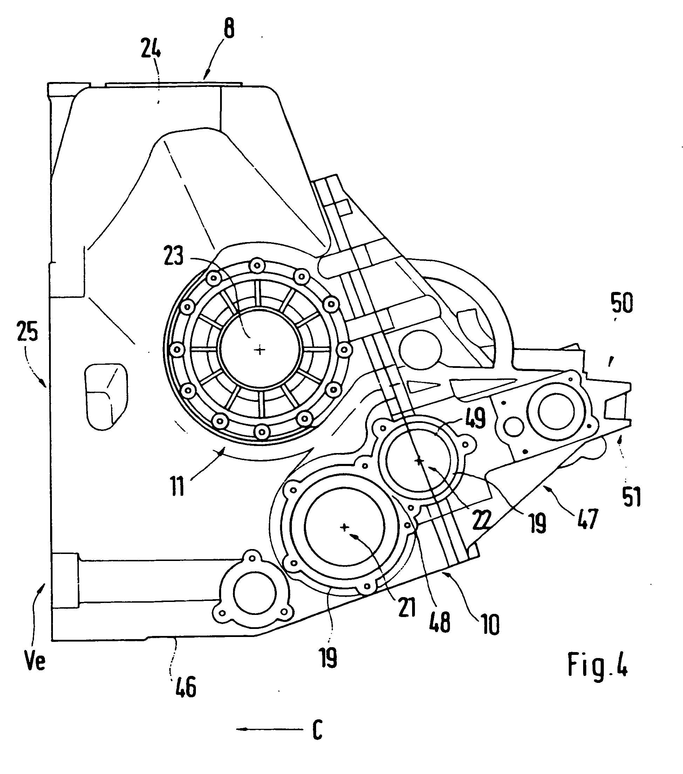

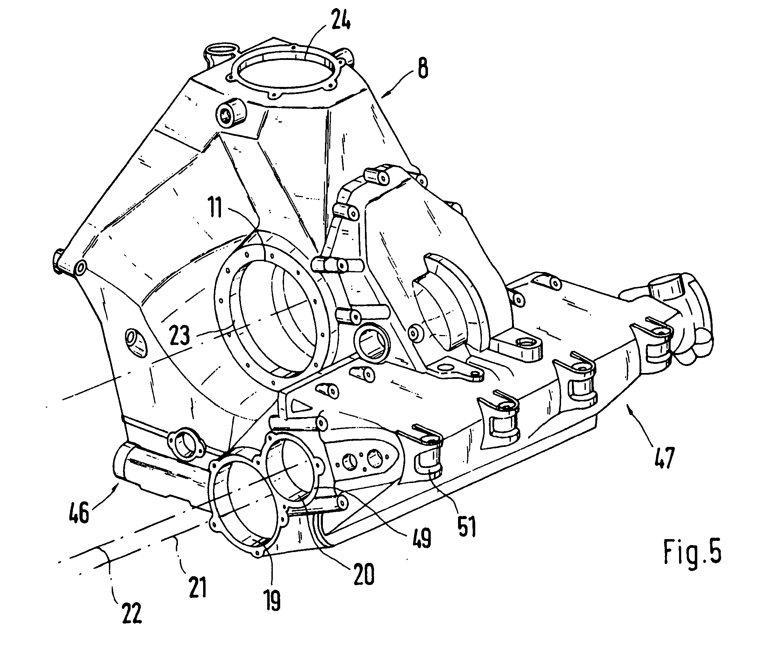

Gemäß den Fig. 3 bis 5 umfasst die Gehäusebaueinheit 8 ein erstes Gehäuseteil 46 und ein zweites Gehäuseteil 47. In dem ersten Gehäuseteil 46 sind die ersten Lager 19 für die Eingangswelle 21 und die dritten Lager 23 für das Differential 11 vorgesehen. Das zweite Gehäuseteil 47 und das erste Gehäuseteil 46 bilden die Lager 20 für die Ausgangswelle 22, und zwar dergestalt, dass die Lager 20 durch Lagerhälften 48, 49 des ersten Gehäuseteils 46 und des zweiten Gehäuseteils 47 dargestellt werden. Dieses Gehäuseteil 47 ist auf einer von der Brennkraftmaschine 7 abgekehrten Seite 50 mit wenigstens einer Tragkonsole 51 für die Befestigung des Antriebsaggregats 1 an einem sich zwischen den Aggregatlagern 16,17 erstreckenden Querträger 52 versehen. Die Lagerhälften 47,48 liegen beiderseits einer relativ aufrecht verlaufenden Trennebene 53, entlang der das erste Gehäuseteil 46 und das zweite Gehäuseteil 47 unter Vermittlung von Schrauben 54 miteinander verbunden sind. Aus Fig. 3 ist ersichtlich, dass der Behälterbereich 24, der Aufnahmeraum 26 und ein Differentialraum 55 durch eine Wandstruktur 56 voneinander getrennt sind. Diese Wandstruktur 56 verbindet die Rückwand 33 mit einer Vorderwand 57 und einer Bodenwand 58, so dass ein steifer Rahmenverbund für die Gehäusebaueinheit 8 entsteht.

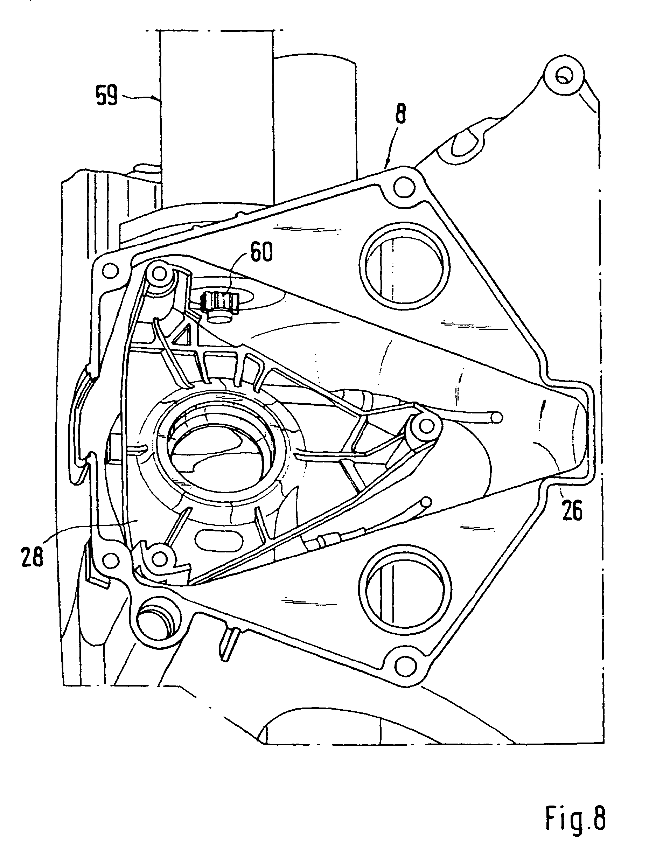

In Fig. 8 wird gezeigt wie eine Anlassvorrichtung 59 für die Brennkraftmaschine 1 in die Gehäusebaueinheit 8 eingesetzt ist. Danach durchdringt die Anlassvorrichtung 59 mit einem Anlassritzel 60 die Seitenwand 29 der Gehäusebaueinheit 8, wobei das Anlassritzel 60 mit einem nicht gezeigten Zahnkranzelement der Kupplung 9 zusammenarbeitet.

## Patentansprüche

1. Antriebsaggregat für ein Kraftfahrzeug, insbesondere einen Personenkraftwagen der Sportwagengattung, das eine Brennkraftmaschine (7) und eine Gehäusebaueinheit (8) zur Aufnahme einer Kupplung (9), eines Getriebes (10) und eines Differentials (11) umfasst, wobei die die Kupplung (9) aufnehmende und mit der Brennkraftmaschine (7) verbundene Gehäusebaueinheit (8) des Antriebsaggregats (1) erste Lager (19) und zweite Lager (29) für eine Eingangswelle (21) sowie eine Ausgangswelle (22) des Getriebes (11) und dritte Lager (23) für das Differential (11) aufweist,
**dadurch gekennzeichnet, dass**
- in die Gehäusebaueinheit (8) ein Behälterbereich (24) für eine Trockensumpfschmierung der Brennkraftmaschine (7) integriert ist, wobei
- die als eine von einer Gehäusestruktur (18) der Brennkraftmaschine (7) getrennt hergestellte Gehäusebaueinheit (8) und die Gehäusestruktur (18) der Brennkraftmaschine (7) als getrennte Bauteile an einer Verbindungsebene (Ve) zusammengesetzt sind, wobei
- die Gehäusebaueinheit (8) auf der der Brennkraftmaschine (7) zugekehrten Seite (25) einen Aufnahmeraum (26) für die Kupplung (9) besitzt, so dass die Kupplung (9) unter Vermittlung einer Schwungscheibe (38) an einer Kurbelwelle (14) der Brennkraftmaschine (7) in Lage gehalten wird.

2. Antriebsaggregat nach Anspruch 1, **dadurch gekennzeichnet, dass** Eingangswelle (21) und Ausgangswelle (22) quer zu einer Längsmittelebene (B-B) des Personenkraftwagen (1) angeordnet sind.

3. Antriebsaggregat nach Anspruch 1, **dadurch gekennzeichnet**, die Gehäusebaueinheit (8) ein erstes Gehäuseteil (46) für die ersten Lager (19) der Eingangswelle (21) und die dritten Lager (23) des Differentials (11) umfasst, wobei ein zweites Gehäuseteil (47) zusammen mit dem ersten Gehäuseteil (46) die zweiten Lager (20) für die Ausgangswelle (22) bildet.

4. Antriebsaggregat nach Anspruch 3, **dadurch gekennzeichnet, dass** die zweiten Lager (20) durch Lagerhälften (48,49) des ersten Gehäuseteils (46) und des zweiten Gehäuseteils (47) gebildet werden.

5. Antriebsaggregat nach Anspruch 4, **dadurch gekennzeichnet, dass** die Lagerhälften (48,49) beiderseits einer Trennebene (53) vorgesehen sind, an der das erste Gehäuseteil (46) und das zweite Gehäuseteil (47) zusammengesetzt sind.

6. Antriebsaggregat nach Anspruch 1, **dadurch gekennzeichnet, dass** die Trennebene (53) zwischen dem ersten Gehäuseteil (46) und dem zweiten Gehäuseteil (47) relativ aufrecht verläuft.

7. Antriebsaggregat nach einem oder mehreren der vorangehenden Ansprüche, **dadurch gekennzeichnet, dass** die Gehäusebaueinheit (8) zur Aufnahme einer Anlassvorrichtung (59) der Brennkraftmaschine (7) ausgebildet ist, die mit der Kupplung (9) zusammenarbeitet.

8. Antriebsaggregat nach Anspruch 7, **dadurch gekennzeichnet, dass** die Anlassvorrichtung (59) mit einem Anlassritzel (60) durch eine Seitenwand (29) der Gehäusebaueinheit (8) hindurchgeführt ist, wobei das Anlassritzel (60) mit einem Zahnkranzelement der Kupplung (9) zusammenarbeitet.

9. Antriebsaggregat nach einem oder mehreren der vorangehenden Ansprüche, **dadurch gekennzeichnet, dass** die Gehäusebaueinheit (8) auf einer von der Brennkraftmaschine abgekehrten Seite (50) mit wenigstens einer Tragkonsole (51) für die Lagerung des Antriebsaggregats (1) versehen ist.

## Claims

1. Drive unit for a motor vehicle, in particular a passenger car of the sports car type, which drive unit comprises an internal combustion engine (7) and a housing unit (8) for accommodating a clutch (9), a gearbox (10) and a differential (11), wherein the housing unit (8), which accommodates the clutch (9) and is connected to the internal combustion engine (7), of the drive unit (1) has first bearings (19) and second bearings (29) for an input shaft (21) and an output shaft (22) of the gearbox (11) and third bearings (23) for the differential (11),
**characterized in that**
- a container (24) for dry sump lubrication of the internal combustion engine (7) is integrated into the housing unit (8), wherein
- the housing unit (8) which is manufactured as a housing unit which is separate from a housing structure (18) of the internal combustion engine (7) and the housing structure (18) of the internal combustion engine (7) are combined, as separate components, at a connection level (Ve), wherein
- the housing unit (8) has, on the side (25) facing the internal combustion engine (7), a receptacle space (26) for the clutch (9), with the result that the clutch (9) is held in position on a crankshaft (14) of the internal combustion engine (7) with an intermediately positioned disc fly wheel (38).

2. Drive unit according to Claim 1, **characterized in that** the input shaft (21) and output shaft (22) are arranged transversely with respect to a longitudinal centre plane (B-B) of the passenger car (1).

3. Drive unit according to Claim 1, **characterized in that** the housing unit (8) comprises a first housing component (46) for the first bearings (19) of the input shaft (21) and the third bearings (23) of the differential (11), wherein a second housing component (47) forms, together with the first housing component (46), the second bearings (20) for the output shaft (22).

4. Drive unit according to Claim 3, **characterized in that** the second bearings (20) are formed by bearing halves (48, 49) of the first housing component (46) and of the second housing component (47).

5. Drive unit according to Claim 4, **characterized in that** the bearing halves (48, 49) are provided on each side of a dividing plane (53) in which the first housing component (46) and the second housing component (47) are joined.

6. Drive unit according to Claim 1, **characterized in that** the dividing plane (53) extends in a relatively upright fashion between the first housing component (46) and the second housing component (47).

7. Drive unit according to one or more of the preceding claims, **characterized in that** the housing unit (8) is designed to accommodate a starter device (59) of the internal combustion engine (7), which starter device (59) interacts with the clutch (9).

8. Drive unit according to Claim 7, **characterized in that** a starter pinion (60) of the starter device (59) is made to extend through a side wall (29) of the housing unit (8), wherein the starter pinion (60) interacts with a toothed ring element of the clutch (9).

9. Drive unit according to one or more of the preceding claims, **characterized in that,** on a side (50) facing away from the internal combustion engine, the housing unit (8) is provided with at least one supporting bracket (51) for supporting the drive unit (1).

## Revendications

1. Unité d'entraînement pour un véhicule automobile, en particulier un véhicule automobile léger du type voiture de sport, qui comprend un moteur à combustion interne (7) et une unité constructive de boîtier (8) pour recevoir un embrayage (9), une boîte de vitesses (10) et un différentiel (11), l'unité constructive de boîtier (8) de l'unité d'entraînement (1) recevant l'embrayage (9) et connectée au moteur à combustion interne (7) présentant des premiers paliers (19) et des deuxièmes paliers (29) pour un arbre d'entrée (21) ainsi qu'un arbre de sortie (22) de la boîte de vitesses (10) et des troisièmes paliers (23) pour le différentiel (11),
**caractérisée en ce que**
- dans l'unité constructive de boîtier (8) est intégrée une zone de récipient (24) pour une lubrification à carter sec du moteur à combustion interne (7),
- l'unité constructive de boîtier (8) fabriquée sous forme séparée d'une structure de boîtier (18) du moteur à combustion interne (7) et la structure de boîtier (18) du moteur à combustion interne (7) sont assemblées sous forme de composants séparés au niveau d'un plan de connexion (Ve),
- l'unité constructive de boîtier (8) possède du côté (25) tourné vers le moteur à combustion interne (7) un espace de réception (26) pour l'embrayage (9), de sorte que l'embrayage (9) soit maintenu en position par l'intermédiaire d'un disque oscillant (38) sur un vilebrequin (14) du moteur à combustion interne (7).

2. Unité d'entraînement selon la revendication 1, **caractérisée en ce que** l'arbre d'entrée (21) et l'arbre de sortie (22) sont disposés transversalement à un plan médian longitudinal (B-B) du véhicule automobile léger (1).

3. Unité d'entraînement selon la revendication 1, **caractérisée en ce que** l'unité constructive de boîtier (8) présente une première partie de boîtier (46) pour les premiers paliers (19) de l'arbre d'entrée (21) et les troisièmes paliers (23) du différentiel (11), une deuxième partie de boîtier (47) formant conjointement avec la première partie de boîtier (46) les deuxièmes paliers (20) pour l'arbre de sortie (22).

4. Unité d'entraînement selon la revendication 3, **caractérisée en ce que** les deuxièmes paliers (20) sont formés par des moitiés de palier (48, 49) de la première partie de boîtier (46) et de la deuxième partie de boîtier (47).

5. Unité d'entraînement selon la revendication 4, **caractérisée en ce que** les moitiés de palier (48, 49) sont prévues de part et d'autre d'un plan de séparation (53), sur lequel la première partie de boîtier (46) et la deuxième partie de boîtier (47) sont assemblées.

6. Unité d'entraînement selon la revendication 1, **caractérisée en ce que** le plan de séparation (53) s'étend relativement verticalement entre la première partie de boîtier (46) et la deuxième partie de boîtier (47).

7. Unité d'entraînement selon l'une quelconque ou plusieurs des revendications précédentes, **caractérisée en ce que** l'unité constructive de boîtier (8) est réalisée pour recevoir un dispositif de démarrage (59) du moteur à combustion interne (7), qui coopère avec l'embrayage (9).

8. Unité d'entraînement selon la revendication 7, **caractérisée en ce que** le dispositif de démarrage (59) est guidé avec un pignon de démarrage (60) à travers une paroi latérale (29) de l'unité constructive de boîtier (8), le pignon de démarrage (60) coopérant avec un élément de couronne dentée de l'embrayage (9).

9. Unité d'entraînement selon l'une quelconque ou plusieurs des revendications précédentes, **caractérisée en ce que** l'unité constructive de boîtier (8) est pourvue d'au moins une console de support (51) pour le support de l'unité d'entraînement (1) sur un côté (50) opposé au moteur à combustion interne.
